# EUROPEAN PATENT SPECIFICATION

(11) **EP 3 743 994 B1**
(45) Date of publication and mention of the grant of the patent: **17.07.2024**
(21) Application number: 18701452.7
(22) Date of filing: 22.01.2018
(51) Int. Cl.: H02P 25/098, H02P 25/22

(54) **FOUR-PHASE RELUCTANCE MOTOR**
VIERPHASIGER RELUKTANZMOTOR
MOTEUR À RÉLUCTANCE À QUATRE PHASES

(43) Date of publication of application: 02.12.2020
(73) Proprietor: Pierburg Pump Technology GmbH, 41460 Neuss (DE)
(72) Inventor: HELMIS, Martin, 41464 Neuss (DE)
(74) Representative: terpatent PartGmbB
(86) International application number: PCT/EP2018/051472
(87) International publication number: WO 2019/141385

(56) References cited:
- CN-A- 101 702 562
- CN-A- 105 958 892
- CN-B- 103 337 993
- JP-A- 2001 186 736
- JP-A- 2016 163 440
- US-A- 4 883 999
- H A ASHOUR ET AL: "Shunt-excited doubly salient 8/6-switched reluctance machine", 8 September 2000 (2000-09-08), pages 391 - 401, XP055507696, Retrieved from the Internet <URL:https://ieeexplore.ieee.org/ielx5/2194/18889/00872760.pdf?tp=&arnumber=872760&isnumber=18889> [retrieved on 20180918]

## Description

The invention is directed to a four-phase reluctance motor, for example, for an automotive auxiliary unit.

Reluctance motors are provided with a ferromagnetic motor rotor which is not magnetized (neither permanently magnetized nor electromagnetically, magnetized). As a result, reluctance motors can be provided simple and cost-efficient. In addition, reluctance motors can provide a high power density. Reluctance motors can generally be categorized into two types: switched reluctance motors and synchronous reluctance motors.

Switched reluctance motors are provided with a motor stator comprising several stator poles with separate concentrated windings. The ferromagnetic motor rotor is provided with several rotor poles, wherein the rotor poles of a reluctance motor are not actively magnetized, neither permanently magnetized nor electromagnetically magnetized. The number of rotor poles is normally less than the number of stator poles. A typical combination is six stator poles and four rotor poles. The stator poles are energized successively with a unipolar drive current to generate a revolving stator magnetic field driving the ferromagnetic motor rotor. Switched reluctance motors have a simple construction and, because of the unipolar stator pole energization, no significant magnetic hysteresis losses are generated in the motor stator. However, switched reluctance motors are disadvantageous regarding torque pulsation.

Synchronous reluctance motors are typically provided with a motor stator comprising several stator poles being provided with distributed windings, i.e. at least two stator poles are wound with the same wire. Stator poles being wound by the same wire define a stator pole group. The ferromagnetic motor rotor is provided with several rotor poles, wherein the number of rotor poles is normally less or equal to the number of stator poles. All stator poles are energized synchronously with a multi-phase alternating drive current, wherein each stator pole group is provided with one phase of the multi-phase drive current. As a result, a revolving stator magnetic field is generated which drives the ferromagnetic motor rotor. Synchronous reluctance motors are advantageous regarding torque pulsation, but are more complex compared to switched reluctance motors. In addition, magnetic hysteresis losses are generated in the motor stator because of the alternating drive current.

CN 103337993 B discloses a switched four-phase reluctance motor with a ferromagnetic motor rotor, a motor stator with 4*n stator poles, each stator pole being provided with a separate concentrated stator coil, and a motor control unit energizing the stator coils for driving the motor rotor, wherein the stator coils are successively energized by the motor control unit with a four-phase drive current.

JP 2016-163440 A and CN 101702562 A disclose four-phase reluctance motors with a ferromagnetic motor rotor, a motor stator with 4*n stator poles, each stator pole being provided with a separate concentrated stator coil, and a motor control unit energizing the stator coils for driving the motor rotor, wherein the stator coils are energized by the motor control unit with a four-phase drive current, and wherein the stator coils and/or the motor control unit are arranged to provide inverse circumferential flow directions of the drive current for adjacent stator coils.

It is an object of the invention to provide a simple and efficient reluctance motor with low torque pulsation.

This object is achieved with a four-phase reluctance motor with the features of claim 1.

The four-phase reluctance motor according to the invention is provided with a ferromagnetic motor rotor and with a motor stator with 4*n stator poles, wherein n is a positive integer. Each stator pole is provided with a separate concentrated stator coil, i.e. each stator coil is provided by a separate wire. As a result, each stator coil can be individually energized.

The four-phase reluctance motor according to the invention is also provided with a motor control unit energizing the stator coils for driving the motor rotor. The stator coils are grouped into four groups of n stator coils. All stator coils are synchronously energized with a four-phase unipolar drive current, wherein each stator coil group is energized by one phase of the four-phase unipolar drive current.

The stator coils and/or the motor control unit are arranged to provide inverse circumferential flow directions of the drive current for adjacent stator coils so that adjacent stator poles define opposite magnetic poles when being energized. This can be either realized by winding adjacent stator coils in inverse circumferential direction or by inversely electrically biasing adjacent stator coils. As a result, a revolving alternating magnetic field is generated in the motor stator, which drives the ferromagnetic motor rotor.

The synchronous energization of the stator coils allows low torque pulsation. In addition, the unipolar energization of the stator coils minimizes the magnetic hysteresis losses in the motor stator. Since the motor stator is provided with 4*n stator poles, diametrically opposite stator poles always have the same magnetic polarity. As a result, the magnetic path of the magnetic flux through the motor rotor is short so that the magnetic hysteresis losses in the motor rotor are low. The very low magnetic hysteresis losses in the motor stator as well as in the motor rotor cause a high efficiency of the reluctance motor.

According to the present invention, each phase of the four-phase unipolar drive current is provided with a substantially sinusoidal current profile allowing a very homogeneous drive of the motor rotor so that the torque pulsations of the reluctance motor are minimized.

In a preferred embodiment of the invention, the ferromagnetic motor rotor is provided with 3*n rotor poles providing very short magnetic flux paths through the motor rotor. As a result, the magnetic hysteresis losses in the motor rotor are very low allowing a high efficiency of the reluctance motor.

In a preferred embodiment of the invention, the drive currents of adjacent stator coils are provided with a uniform phase shift of 90° with respect to each other. This allows a homogeneous drive of the motor rotor with very low torque pulsations.

Preferably, the stator coils are interconnected using the star connection scheme, meaning that all stator coils are electrically connected with one single reference node. This allows a simple electrical connection and energization of the stator coils, because only one end of each stator coil has to be electrically connected with the motor control unit.

In a preferred embodiment of the invention, all stator poles are magnetically connected with each other via a magnetic back iron which improves the efficiency of the reluctance motor.

Preferably, the motor stator surrounds the motor rotor. This allows a compact motor rotor design with short path length of the magnetic flux through the motor rotor. As a result, the magnetic hysteresis losses in the motor rotor are low allowing a very efficient reluctance motor.

Typically, the motor control unit is provided with four semiconductor switches and with four diodes to generate the four-phase drive current. But in a preferred embodiment of the invention, the motor control unit is provided with eight semiconductor switches for providing the four-phase drive current. The additional four semiconductor switches either replace the four diodes or are electrically connected in parallel with the diodes. This allows a more efficient embodiment of the motor control unit with less electric power loss.

Two embodiments of the invention are described with reference to the enclosed drawings, wherein
figure 1 shows a first embodiment of the four-phase reluctance motor according to the invention, wherein a motor stator is provided with four stator poles and a motor rotor is provided with three rotor poles,
figure 2 shows an electric drive circuit provided in a motor control unit of the reluctance motor of figure 1 to generate the four-phase unipolar drive current,
figure 3 shows the rotor angle dependent current characteristics of the four phases of the four-phase drive current, and
figure 4 shows a second embodiment of a four-phase reluctance motor according to the invention, wherein the motor stator is provided with eight stator poles and the motor rotor is provided with six rotor poles.

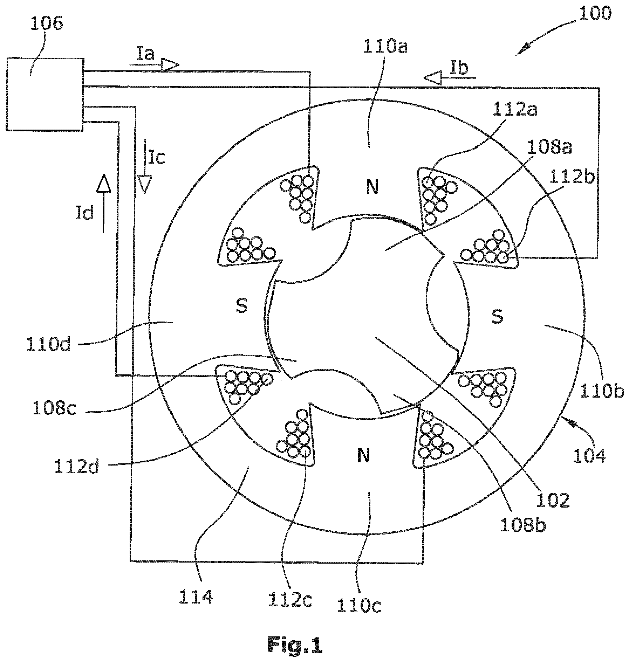

Figure 1 shows a four-phase reluctance motor 100 with a ferromagnetic motor rotor 102, a motor stator 104, and a motor control unit 106.

The motor rotor 102 is provided with three rotor poles 108a-c and the motor stator 104 is provided with four stator poles 110a-d. Each stator pole 110a-d is provided with a separate concentrated stator coil 112a-d. The stator poles 110a-d are magnetically connected with each other via a magnetic back iron 114.

The motor control unit 106 is electrically connected with the stator coils 112a-d to energize the stator coils 112a-d for driving the motor rotor 102.

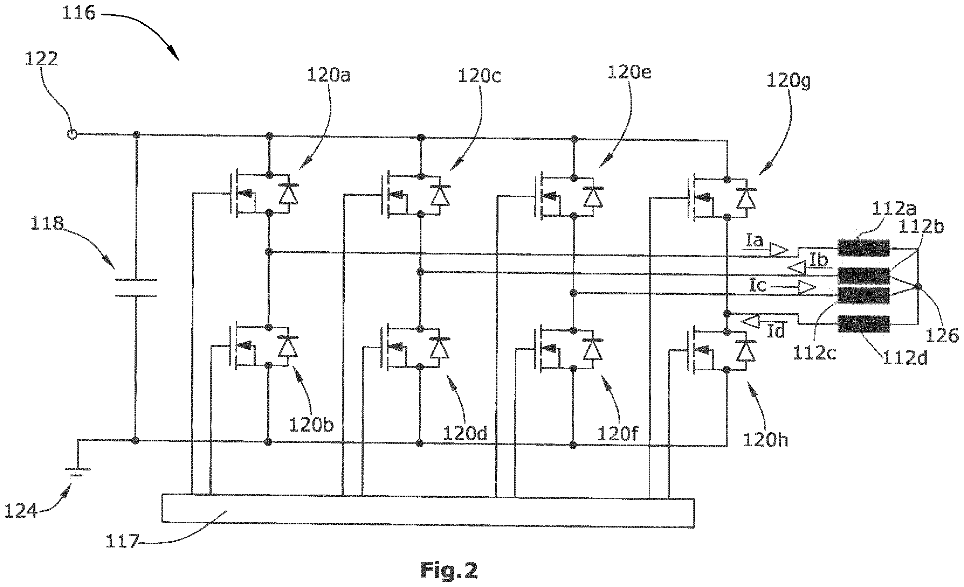

The motor control unit 106 comprises a driving circuit 116 and a microcontroller 117 shown in figure 2. The driving circuit 116 comprises a capacitor 118 and eight semiconductor switches 120a-h.

The capacitor 118 is electrically connected with a supply voltage terminal 122 and with an electric ground terminal 124. The input terminals of the semiconductor switches 120a,120c,120e,120g are electrically connected with the supply voltage terminal 122 and the output terminals of the semiconductor switches 120b,120d,120f,120h are electrically connected with the electric ground terminal 124. The control terminals of the semiconductor switches 120a-h are electrically connected with the microcontroller 117.

The output terminal of the semiconductor switch 120a and the input terminal of the semiconductor switch 120b are electrically connected with the input of the stator coil 112a. The output terminal of the semiconductor switch 120c and the input terminal of the semiconductor switch 120d are electrically connected with the input of the stator coil 112b. The output terminal of the semiconductor switch 120e and the input terminal of the semiconductor switch 120f are electrically connected with the input of the stator coil 112c. The output terminal of the semiconductor switch 120g and the input terminal of the semiconductor switch 120h are electrically connected with the input of the stator coil 112d. The outputs of the stator coils 112a-d are electrically connected with a reference node 126.

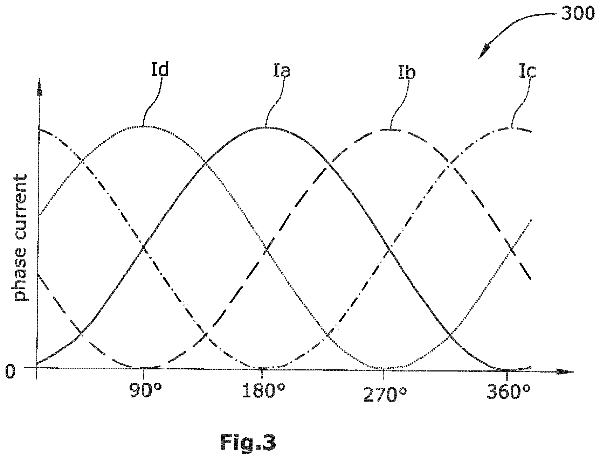

The semiconductor switches 120a-h are controlled by the microcontroller 117 to generate a four-phase drive current with phase currents ra-d. The rotor angle dependent characteristics of the four phase currents Ia-d of the four-phase drive current are shown in figure 3. All phase currents Ia-d are unipolar and are provided with a substantially sinusoidal current profile 300. The phase currents Ia-d are provided with different phase angles ϕa-d, wherein adjacent phase currents are provided with a phase shift Δϕ of 90°.

In the present embodiment of the invention, the phase angle ϕa of the phase current Ia is 90°, the phase angle ϕb of the phase current Ib is 180°, the phase angle ϕc of the phase current Ic is 270°, and the phase angle ϕd of the phase current Id is 360°.

The phase current Ia,Ic flow out of the drive circuit, wheras the phase currents Ib,Id flow into the drive circuit 116. As a result, the stator coils 112a,112c are provided with an inverse circumferential direction of the drive current compared to the stator coils 112b,112d. Hence, the stator poles 110a,110c have an opposite magnetic polarity compared to the stator poles 110b,110d when being energized. In the present embodiment of the invention, the stator poles 110a,110c form magnetic north poles when being energized, whereas the stator poles 110b,110d form magnetic south poles when being energized.

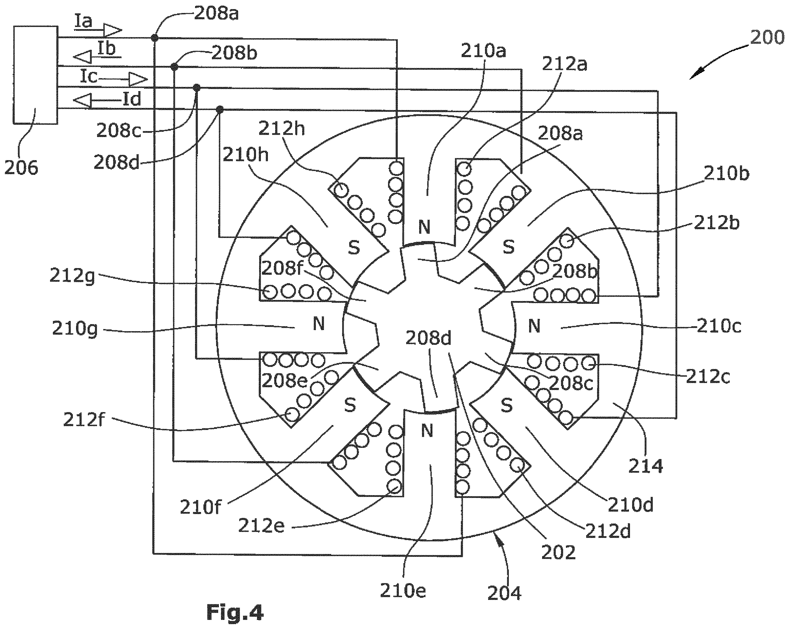

Figure 4 shows a four-phase reluctance motor 200 according to a second embodiment of the invention. Features of the reluctance motor 200 which correspond with features of the reluctance motor 100 shown in figure 1 are provided with corresponding reference numbers being increased by 100.

The motor rotor 202 is provided with six rotor poles 208a-f and the motor stator 204 is provided with eight stator poles 210a-h. Each stator pole 210ah is provided with a separate concentrated stator coil 212a-h.

The stator coils 212a,212e are electrically connected with a connection node 228a, the stator coils 212b,212f are electrically connected with a connection node 228b, the stator coils 212c,212g are electrically connected with a connection node 228c, and the stator coils 212d(212h are electrically connected with a connection node 228d. The connection nodes 228a-d are electrically connected with the motor control unit 206.

The connection node 228a is provided with the phase current Ia, the connection node 228b is provided with the phase current Ib, the connection node 228c is provided with the phase current Ic, and the connection node 228d is provided with the phase current Id. As a result, in the present embodiment of the invention, the stator poles 210a,210c,210e,210g form magnetic north poles when being energized and the stator poles 210b,210d,210f,210h form magnetic south poles when being energized.

### Reference list

- 100: four-phase reluctance motor
- 102: ferromagnetic motor rotor
- 104: motor stator
- 106: motor control unit
- 108a-c: rotor poles
- 110a-d: stator poles
- 112a-d: stator coils
- 114: magnetic back iron
- 116: driving circuit
- 117: microcontroller
- 118: capacitor
- 120a-h: semiconductor switches
- 122: supply voltage terminal
- 124: electric ground terminal
- 126: reference node
- 200: four-phase reluctance motor
- 202: ferromagnetic motor rotor
- 204: motor stator
- 206: motor control unit
- 208a-f: rotor poles
- 210a-h: stator poles
- 212a-h: stator coils
- 214: magnetic back iron
- 228a-d: connection nodes
- 300: sinusoidal current profile
- Ia-d: phase currents
- Φa-d: phase angles

## Claims

1. Four-phase reluctance motor (100,200) with
a ferromagnetic motor rotor (102,202),
a motor stator (104,204) with 4* n stator poles (110a-d,210a-h), wherein n is a positive integer, each stator pole (110a-d,210a-h) being provided with a separate concentrated stator coil (112a-d,212a-h), and
a motor control unit (106,206) energizing the stator coils (112a-d,212a-h) for driving the motor rotor (102,202), wherein the stator coils (112a-d,212a-h) are synchronously energized by the motor control unit (106,206) with a four-phase unipolar drive current, and
wherein the stator coils (112a-d,212a-h) and/or the motor control unit (106,206) are arranged to provide inverse circumferential flow directions of the drive current for adjacent stator coils (112a-d,212ah)
**characterized in that**
each phase (la-d) of the four-phase unipolar drive current is provided with a substantially sinusoidal current profile (300).

2. Four-phase reluctance motor according (100,200) to claim 1, wherein the ferromagnetic motor rotor (102,202) is provided with 3*n rotor poles (108a-c,208a-f).

3. Four-phase reluctance motor (100,200) according to any preceding claim, wherein the drive currents (la-d) of adjacent stator coils are provided with a phase shift (Δϕ) of 90° with respect to each other.

4. Four-phase reluctance motor (100,200) according to any preceding claim, wherein all stator coils (112a-d,212ah) are electrically connected with one single reference node (126).

5. Four-phase reluctance motor (100,200) according to any preceding claim, wherein all stator poles (110a-d,210a-h) are magnetically connected with each other via a magnetic back iron (114,214).

6. Four-phase reluctance motor (100,200) according to any preceding claim, wherein the motor stator (104,204) surrounds the motor rotor (102,202).

7. Four-phase reluctance motor (100,200) according to any preceding claim, wherein the motor control unit (106,206) is provided with eight semiconductor switches (120a-h) for providing the four-phase drive current.

## Patentansprüche

1. Vierphasen-Reluktanzmotor (100, 200) mit
einem ferromagnetischen Motorrotor (102,202),
einem Motorstator (104, 204) mit 4*n Statorpolen (110a-d, 210a-h), wobei n eine positive Ganzzahl ist, und wobei jeder Statorpol (110a-d, 210a-h) eine separate gebündelte Statorspule (112a-d, 212a-h) aufweist, und
eine Motorsteuereinheit (106, 206), die die Statorspulen (112a-d, 212a-h) zum Antreiben des Motorrotors (102, 202) bestromt,
wobei die Statorspulen (112a-d, 212a-h) durch die Motorsteuereinheit (106, 206) synchron mit einem vierphasigen unipolaren Antriebsstrom bestromt werden, und
wobei die Statorspulen (112a-d, 212a-h) und/oder die Motorsteuereinheit (106, 206) eingerichtet sind, entgegengesetzte Umfangsflussrichtungen des Antriebsstroms für benachbarte Statorspulen (112a-d, 212a-h) bereitzustellen,
**dadurch gekennzeichnet, dass**
jede Phase (Ia-d) des vierphasigen unipolaren Antriebsstroms ein im Wesentlichen sinusförmiges Stromprofil (300) aufweist.

2. Vierphasen-Reluktanzmotor (100, 200) nach Anspruch 1, wobei der ferromagnetische Motorrotor (102, 202) 3*n Rotorpole (108a-c, 208a-f) aufweist.

3. Vierphasen-Reluktanzmotor (100, 200) nach einem der vorhergehenden Ansprüche, wobei die Antriebsströme (Ia-d) benachbarter Statorspulen eine Phasenverschiebung (Δϕ) von 90° zueinander aufweisen.

4. Vierphasen-Reluktanzmotor (100, 200) nach einem der vorhergehenden Ansprüche, wobei alle Statorspulen (112a-d, 212a-h) mit einem einzigen Referenzknoten (126) elektrisch verbunden sind.

5. Vierphasen-Reluktanzmotor (100, 200) nach einem der vorhergehenden Ansprüche, wobei alle Statorpole (110a-d, 210a-h) über einen magnetischen Rückschluss (114, 214) magnetisch miteinander verbunden sind.

6. Vierphasen-Reluktanzmotor (100, 200) nach einem der vorhergehenden Ansprüche, wobei der Motorstator (104, 204) den Motorrotor (102, 202) umgibt.

7. Vierphasen-Reluktanzmotor (100, 200) nach einem der vorhergehenden Ansprüche, wobei die Motorsteuereinheit (106, 206) zum Bereitstellen des vierphasigen Antriebsstroms acht Halbleiterschalter (120a-h) aufweist.

## Revendications

1. Moteur à réluctance quadriphasé (100,200) avec
un rotor ferromagnétique de moteur (102,202),
un stator de moteur (104,204) avec 4*n pôles de stator (110a-d,210a-h), dans lequel n est un nombre entier positif, chaque pôle de stator (110ad,210a-h) étant fourni avec une bobine de stator concentrée séparée (112a-d,212a-h), et
une unité de contrôle du moteur (106,206) excitant les bobines du stator (112a d,212a-h) pour entraîner le rotor du moteur (102,202),
dans lequel les bobines du stator (112a-d,212a-h) sont excitées de manière synchronisée par l'unité de contrôle du moteur (106,206) avec un courant d'entraînement unipolaire quadriphasé, et
dans lequel les bobines du stator (112a-d,212a-h) et/ou l'unité de contrôle du moteur (106,206) sont arrangées pour fournir des directions de flux circonférentielles inverses du courant d'entraînement pour les bobines du stator adjacentes (112a-d,212a-h).
**caractérisé en ce que**
chaque phase (Ia-d) du courant d'entraînement unipolaire quadriphasé est fournie avec un profil de courant substantiellement sinusoïdal (300).

2. Moteur à réluctance quadriphasé (100,200) selon la revendication 1, dans lequel le rotor ferromagnétique de moteur (102,202) est fourni avec 3*n pôles de rotor (108a-c,208a-f).

3. Moteur à réluctance quadriphasé (100,200) selon l'une des revendications précédentes, dans lequel les courants d'entraînement (Ia-d) des bobines de stator adjacentes sont fournis avec un déphasage (Δcp) de 90° l'un par rapport à l'autre.

4. Moteur à réluctance quadriphasé (100,200) selon l'une des revendications précédentes, dans lequel toutes les bobines du stator (112ad,212a-h) sont connectées électriquement à un seul noeud de référence (126).

5. Moteur à réluctance quadriphasé (100,200) selon l'une des revendications précédentes, dans lequel tous les pôles du stator (110ad,210a-h) sont connectés magnétiquement entre eux par l'intermédiaire d'un fer arrière magnétique (114,214).

6. Moteur à réluctance quadriphasé (100,200) selon l'une des revendications précédentes, dans lequel le stator du moteur (104,204) entoure le rotor du moteur (102,202).

7. Moteur à réluctance quadriphasé (100,200) selon l'une des revendications précédentes, dans lequel l'unité de contrôle du moteur (106,206) comprend huit commutateurs à semi-conducteur (120a-h) pour fournir le courant d'entraînement quadriphasé.
